# EUROPEAN PATENT APPLICATION

(11) **EP 4 647 448 A1**
(43) Date of publication of application: **12.11.2025**
(21) Application number: 24815378.5
(22) Date of filing: 23.05.2024
(51) Int. Cl.: C08F 16/38, C08L 29/14

(54) **POLYVINYL ACETAL RESIN, AND RESIN COMPOSITION FOR CERAMIC GREEN SHEET**

(30) Priority: 26.05.2023 JP 2023087008
(71) Applicant: Sekisui Chemical Co., Ltd., Osaka-shi, Osaka 530-8565 (JP)
(72) Inventor: MAEDA, Takayuki, Koka-shi, Shiga 528-8585 (JP)
(74) Representative: Cabinet Beau de Loménie
(86) International application number: PCT/JP2024/019061
(87) International publication number: WO 2024/247894

(57) **Abstract**

The present invention provides a polyvinyl acetal resin and a resin composition for a ceramic green sheet. The polyvinyl acetal resin and the resin composition can provide a ceramic green sheet in which ceramic powder has excellent dispersibility and excellent dispersion stability and which has high strength and is less susceptible to delamination and dimensional changes during drying. The polyvinyl acetal resin and the resin composition can also provide a multilayer ceramic capacitor with excellent reliability. The present invention relates to a polyvinyl acetal resin having a Z average molecular weight (Mz) of 700,000 or more and 2,500,000 or less and a molecular weight differential distribution value at Log M = 6.00 of 5.00 or more and 110.0 or less.

## Description

### TECHNICAL FIELD

The present invention relates to polyvinyl acetal resins and resin compositions for a ceramic green sheet.

### BACKGROUND ART

In recent years, electronic components installed in various electronic devices have become increasingly smaller and multilayered. Multilayer electronic components, such as multilayer circuit boards, multilayer coils, and multilayer ceramic capacitors, have been widely used.

Multilayer ceramic capacitors are typically produced through the following steps.

First, a plasticizer, a dispersant, and the like are added to a solution of a binder resin such as a polyvinyl butyral resin or a poly(meth)acrylate resin in an organic solvent. Ceramic raw material powder is then added and uniformly mixed in a mixer such as a bead mill or a ball mill and deaerated, whereby a ceramic slurry composition having a specific viscosity is obtained. This slurry composition is cast on a surface of a support such as a release-treated polyethylene terephthalate film or a SUS plate using a doctor blade, a reverse roll coater, or the like. The slurry composition is subjected to heating or the like to remove the solvent and other volatile components, and then separated from the support to give a ceramic green sheet.

Next, the obtained ceramic green sheet is screenprinted with a conductive paste that is to serve as an internal electrode. Sheets obtained in this manner are stacked such that the ceramic green sheets and the conductive paste layers alternate with each other, and thermally pressure-bonded to produce a laminate. The obtained laminate is subjected to a treatment called debinding, that is, a treatment to remove components such as the binder resin component in the laminate by heat decomposition. The laminate is then fired to produce a ceramic sintered body, and external electrodes are sintered to the end surfaces of the ceramic sintered body. Through these steps, a multilayer ceramic capacitor is obtained.

Resin compositions for a ceramic green sheet used for producing ceramic green sheets are typically used as solutions containing polyvinyl acetal resins dissolved in organic solvents such as methyl ethyl ketone, toluene, alcohols, and mixtures of these. However, conventional polyvinyl acetal resins may leave trace amounts of undissolved matter when dissolved in organic solvents. Such undissolved matter present in solutions used in multilayer ceramic capacitors tends to cause voids in the debinding step and the firing step or lowers the dispersibility of ceramic powder and the like, thus lowering the electrical properties of the resulting products.

Thus, using polyvinyl acetal resins in ceramic green sheet applications requires removal of undissolved matter by a filtration step after blending the polyvinyl acetal resin with organic/inorganic compounds and the like and dissolving them in an organic solvent.

In response to this, Patent Literature 1 proposes a polyvinyl acetal resin, wherein the rate of decrease in filtration flow rate is lower than 10% when a 5% by weight solution of the polyvinyl acetal resin in a 1:1 solvent mixture of methyl ethyl ketone and/or toluene and ethanol is filtrated using a 5-µm-aperture filter at a filtration temperature of 25°C and a filtration pressure of 10 mmHg. Patent Literature 1 teaches that using such a polyvinyl acetal resin can improve productivity because such a resin leaves less undissolved matter when dissolved in an organic solvent and thus can shorten the filtration time.

### CITATION LIST

### - Patent Literature

Patent Literature 1: JP 2005-325342 A

### SUMMARY OF INVENTION

### - Technical problem

Meanwhile, with the recent increase in functionality and reduction in size of electronic devices, multilayer ceramic capacitors having larger capacity and smaller size have been demanded, and further thinning of ceramic green sheets has been demanded.

However, use of the polyvinyl acetal resin described in Patent Literature 1 provides a ceramic green sheet with insufficient strength.

Furthermore, during laminating and drying ceramic green sheets, delamination (separation between layers) and dimensional changes may occur. When delamination and dimensional changes occur with the thinning of ceramic green sheets, defects in the appearance of the laminate occur after cutting the laminate.

The present invention aims to provide a polyvinyl acetal resin and a resin composition for a ceramic green sheet. The polyvinyl acetal resin and the resin composition can provide a ceramic green sheet in which ceramic powder has excellent dispersibility and excellent dispersion stability and which has high strength and is less susceptible to delamination and dimensional changes during drying. The polyvinyl acetal resin and the resin composition can also provide a multilayer ceramic capacitor with excellent reliability.

### - Solution to problem

The disclosure (1) relates to a polyvinyl acetal resin having a Z average molecular weight (Mz) of 700,000 or more and 2,500,000 or less and a molecular weight differential distribution value at Log M = 6.00 of 5.00 or more and 110.0 or less.

The disclosure (2) relates to the polyvinyl acetal resin according to the disclosure (1), wherein a hydroxy group content relative to the Z average molecular weight (Hydroxy group content/Z average molecular weight) is 1.30 × 10⁻⁵ or more.

The disclosure (3) relates to the polyvinyl acetal resin according to the disclosure (1) or (2), wherein the acetal group content is 50 to 83 mol%.

The disclosure (4) relates to a resin composition for a ceramic green sheet, the resin composition containing the polyvinyl acetal resin according to any of the disclosures (1) to (3) and a plasticizer.

The present invention is described in detail below.

As a result of intensive studies, the present inventors found out that a polyvinyl acetal resin having a Z average molecular weight and a molecular weight differential distribution value at Log M = 6.00 within predetermined ranges can provide a ceramic green sheet in which ceramic powder has excellent dispersibility and excellent dispersion stability and which has high strength and is less susceptible to delamination and dimensional changes during drying. Such a polyvinyl acetal resin can also provide a multilayer ceramic capacitor with excellent reliability. The inventors thus completed the present invention.

The polyvinyl acetal resin of the present invention has a Z average molecular weight (Mz) of 700,000 or more and 2,500,000 or less and a molecular weight differential distribution value at Log M = 6.00 of 5.00 or more and 110.0 or less.

The polyvinyl acetal resin can provide a ceramic green sheet which has high strength and is less susceptible to delamination and dimensional changes during drying.

The polyvinyl acetal resin of the present invention has a Z average molecular weight (Mz) of 700,000 or more and 2,500,000 or less. When the Mz falls within the above range, the wettability of the polyvinyl acetal resin with the ceramic powder is improved, resulting in enhanced dispersion stability.

The Mz is preferably 750,000 or more, more preferably 800,000 or more, and is preferably 2,400,000 or less, more preferably 2,300,000 or less, still more preferably 1,490,000 or less. In other words, the Z average molecular weight is 700,000 to 2,500,000, preferably 750,000 to 2,400,000, more preferably 750,000 to 2,300,000, still more preferably 800,000 to 1,490,000.

The Mz can be measured using N-methylpyrrolidone as a solvent by gel permeation chromatography (GPC) using appropriate standards (e.g., polystyrene standards).

The polyvinyl acetal resin of the present invention has a molecular weight differential distribution value at Log M = 6.00 of 5.00 or more and 110.0 or less. When the molecular weight differential distribution value is within the above range, the dispersibility and the strength can be both achieved in a balanced manner.

The molecular weight differential distribution value at Log M = 6.00 is preferably 7.00 or more, more preferably 8.00 or more, and is preferably 100.0 or less, more preferably 95.0 or less. In other words, the molecular weight differential distribution value at Log M = 6.00 is 5.00 to 110.0, preferably 7.00 to 100.0, more preferably 8.00 to 95.0.

In the present invention, the "molecular weight differential distribution value at Log M = 6.00" refers to a differential distribution value when log M, which is the logarithm of the molecular weight M, is 6.00. The value does not simply indicate that the average molecular weight is high, but rather reflects the proportion of high molecular weight components in the resin.

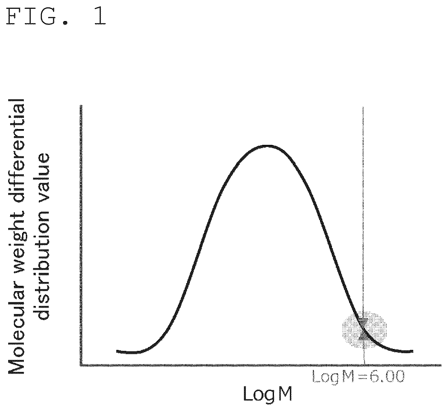

FIG. 1 shows, as an example of the molecular weight differential distribution value, a molecular weight differential distribution curve with Log M on the horizontal axis and the molecular weight differential distribution value on the vertical axis. The molecular weight differential distribution value is not a detected value by optical measurement, but a "value obtained by differentiating the concentration fraction by the logarithm of the molecular weight". The present invention defines that the molecular weight differential distribution value at Log M of 6.00 is 5.00 or more and 110.0 or less.

The molecular weight differential distribution value at Log M = 6.00 can be determined by subjecting a sample prepared by dissolving the measurement target polyvinyl acetal resin in tetrahydrofuran (THF) at a concentration of 0.2% by weight to measurement by gel permeation chromatography (GPC).

The molecular weight differential distribution value at the above-described Mz and Log M = 6.00 can be adjusted, for example, by changing the average degree of polymerization and the degree of saponification of the raw material polyvinyl alcohol resin, and the temperature and time conditions of the acetalization reaction, and by appropriately setting the acetal group content, the hydroxy group content, and the acetyl group content of the polyvinyl acetal resin.

In particular, the molecular weight differential distribution value at the above-described Mz and Log M = 6.00 can be adjusted by changing the holding temperature, holding time, temperature rise time, and temperature rise rate during the acetalization reaction, which are described below.

The polyvinyl acetal resin of the present invention preferably contains an acetal group-containing constitutional unit represented by the following formula (1), a hydroxy group-containing constitutional unit represented by the following formula (2), and an acetyl group-containing constitutional unit represented by the following formula (3).

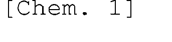

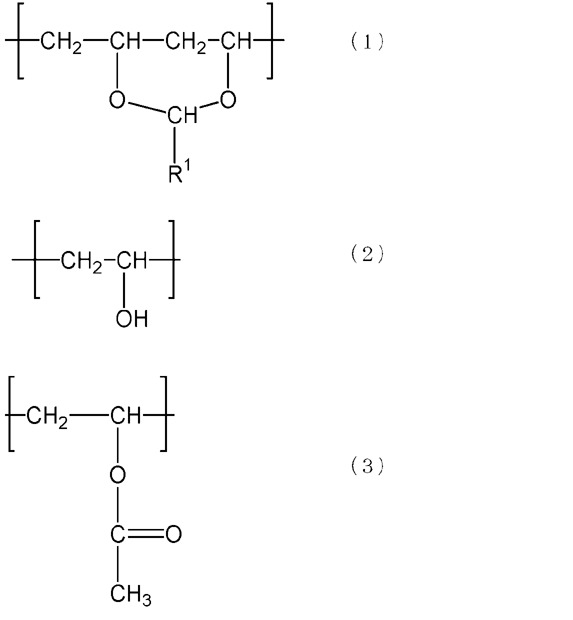

In the formula (1), R¹ represents a hydrogen atom or a C1-C20 alkyl group.

When R¹ in the formula (1) is a C1-C20 alkyl group, examples of the alkyl group include methyl, ethyl, n-propyl, isopropyl, n-butyl, iso-butyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups. Preferred among these are methyl and n-propyl groups.

In the polyvinyl acetal resin of the present invention, the lower limit of the amount of the acetal group-containing constitutional unit represented by the formula (1) (hereinafter also referred to as an "acetal group content") is preferably 50 mol%, and the upper limit thereof is preferably 83 mol%.

The polyvinyl acetal resin having an acetal group content of 50 mol% or more can have improved solubility in an organic solvent. The polyvinyl acetal resin having an acetal group content of 83 mol% or less can have excellent tensile strength.

The lower limit of the acetal group content is more preferably 55 mol%, and the upper limit thereof is more preferably 80 mol%. In other words, the acetal group content is preferably 50 to 83 mol%, more preferably 55 to 80 mol%.

The acetal group content can be measured by ¹H-NMR, for example.

Since an acetal group in a polyvinyl acetal resin is obtained by acetalizing two hydroxy groups in polyvinyl alcohol, the acetal group content is calculated by counting acetalized two hydroxy groups.

In the polyvinyl acetal resin of the present invention, the lower limit of the amount of the hydroxy group-containing constitutional unit represented by the formula (2) (hereinafter also referred to as a "hydroxy group content") is preferably 18 mol%, and the upper limit thereof is preferably 40 mol%.

The polyvinyl acetal resin having a hydroxy group content of 18 mol% or more can have high toughness. The polyvinyl acetal resin having a hydroxy group content of 40 mol% or less can have sufficiently improved solubility in an organic solvent.

The lower limit of the hydroxy group content is more preferably 22 mol%, and the upper limit thereof is more preferably 38 mol%. In other words, the hydroxy group content is preferably 18 to 40 mol%, more preferably 22 to 38 mol%.

The hydroxy group content can be measured by ¹H-NMR, for example.

In the polyvinyl acetal resin of the present invention, the lower limit of the amount of the acetyl group-containing constitutional unit represented by the formula (3) (hereinafter also referred to as an "acetyl group content") is preferably 0.1 mol%, and the upper limit thereof is preferably 22.0 mol%.

The polyvinyl acetal resin having an acetyl group content of 0.1 mol% or more can reduce a viscosity increase in a slurry composition for a ceramic green sheet caused by intramolecular or intermolecular hydrogen bonding between hydroxy groups in the polyvinyl acetal resin. The polyvinyl acetal resin having an acetyl group content of 22.0 mol% or less does not have too high flexibility and can have improved handleability.

The lower limit of the acetyl group content is more preferably 0.5 mol%, and the upper limit thereof is more preferably 15.0 mol%. In other words, the acetyl group content is preferably 0.1 to 22.0 mol%, more preferably 0.5 to 15.0 mol%.

The acetyl group content can be measured by ¹H-NMR, for example.

The hydroxy group content relative to the Z average molecular weight of the polyvinyl acetal resin of the present invention (Hydroxy group content/Mz) is preferably 1.30 × 10⁻⁵ or more. When the Hydroxy group content/Mz is equal to or more than the lower limit, high dispersibility can be achieved.

The Hydroxy group content/Mz is more preferably 1.40 × 10⁻⁵ or more, still more preferably 1.50 × 10⁻⁵ or more, and is preferably 2.70 × 10⁻⁵ or less, more preferably 2.65 × 10⁻⁵ or less, still more preferably 2.60 × 10⁻⁵ or less. In other words, the Hydroxy group content/Mz is preferably 1.30 × 10⁻⁵ to 2.70 × 10⁻⁵, more preferably 1.40 × 10⁻⁵ to 2.65 × 10⁻⁵, still more preferably 1.50 × 10⁻⁵ to 2.60 × 10⁻⁵.

From the standpoint of maintaining mechanical strength when producing a thin film ceramic green sheet, the lower limit of the average degree of polymerization of the polyvinyl acetal resin of the present invention is preferably 500, more preferably 600. From the standpoint of the solubility in an organic solvent and melt viscosity, the upper limit thereof is preferably 10,000, more preferably 9,000. In other words, the average degree of polymerization is preferably 500 to 10,000, more preferably 600 to 9,000.

The average degree of polymerization of the polyvinyl acetal resin is the same as that of the raw material polyvinyl alcohol. The average degree of polymerization can be measured in conformity with JIS K 6726.

The polyvinyl acetal resin of the present invention can be typically produced by acetalizing a polyvinyl alcohol resin.

The polyvinyl alcohol resin may be, for example, a conventionally known polyvinyl alcohol resin such as a resin produced by saponifying a polyvinyl acetate resin with an alkali, an acid, aqueous ammonia, or the like.

The polyvinyl alcohol resin may be completely saponified, but is not necessarily completely saponified and may be a partially saponified polyvinyl alcohol resin as long as the polyvinyl alcohol resin has at least one unit having a hydroxy group diad for a meso or a racemo position in at least one position of the main chain. Examples of other polyvinyl alcohol resins that can be used include copolymers of vinyl alcohol and a monomer copolymerizable with vinyl alcohol such as ethylene-vinyl alcohol copolymer resins and partially saponified ethylene-vinyl alcohol copolymer resins.

Examples of the polyvinyl acetate resin include ethylene-vinyl acetate copolymers.

The polyvinyl alcohol resin preferably has a degree of saponification of 75 mol% or higher.

The degree of saponification is more preferably 76 mol% or higher and 99.4 mol% or lower, more preferably 78 mol% or higher and 98 mol% or lower. In other words, the degree of saponification is preferably 76 to 99.4 mol%, more preferably 78 to 98 mol%.

Use of the polyvinyl alcohol resin allows the Mz to be within a predetermined range.

The acetalization is preferably carried out in a water solvent, a solvent mixture containing water and an organic solvent compatible with water, or an organic solvent.

The organic solvent compatible with water may be, for example, an alcoholic organic solvent.

Examples of the organic solvent include alcoholic organic solvents, aromatic organic solvents, aliphatic ester solvents, ketone solvents, lower paraffin solvents, ether solvents, amide solvents, and amine solvents.

Examples of the alcoholic organic solvents include methanol, ethanol, n-propanol, isopropanol, n-butanol, and tert-butanol.

Examples of the aromatic organic solvents include xylene, toluene, ethyl benzene, and methyl benzoate.

Examples of the aliphatic ester solvents include methyl acetate, ethyl acetate, butyl acetate, methyl propionate, ethyl propionate, methyl butyrate, ethyl butyrate, methyl acetoacetate, and ethyl acetoacetate.

Examples of the ketone solvents include acetone, methyl ethyl ketone, methyl isobutyl ketone, cyclohexanone, methyl cyclohexanone, benzophenone, and acetophenone.

Examples of the lower paraffin solvents include hexane, pentane, octane, cyclohexane, and decane.

Examples of the ether solvents include diethyl ether, tetrahydrofuran, ethylene glycol dimethyl ether, ethylene glycol diethyl ether, and propylene glycol diethyl ether.

Examples of the amide solvents include N,N-dimethylformamide, N,N-dimethylacetamide, N-methylpyrrolidone, and acetanilide.

Examples of the amine solvents include ammonia, trimethylamine, triethylamine, n-butylamine, di-n-butylamine, tri-n-butylamine, aniline, N-methylaniline, N,N-dimethylaniline, and pyridine.

These may be used alone or in admixture of two or more thereof. From the standpoint of the ability to dissolve resin and easy purification, particularly preferred among these are ethanol, n-propanol, isopropanol, and tetrahydrofuran.

The acetalization is preferably carried out in the presence of an acid catalyst.

The acid catalyst is not limited, and examples thereof include mineral acids such as sulfuric acid, hydrochloric acid, nitric acid, and phosphoric acid, carboxylic acids such as formic acid, acetic acid, and propionic acid, and sulfonic acids such as methanesulfonic acid, ethanesulfonic acid, benzenesulfonic acid, and p-toluenesulfonic acid. These acid catalysts may be used alone, or two or more types of compounds may be used in combination. Preferred among these are hydrochloric acid, nitric acid, and sulfuric acid, and particularly preferred is hydrochloric acid.

The aldehyde used for the acetalization may be an aldehyde having a C1-C10 chain aliphatic group, a C1-C10 cyclic aliphatic group, or a C1-C10 aromatic group. The aldehyde used may be a conventionally known aldehyde. The aldehyde used for the acetalization reaction is not limited, and examples thereof include aliphatic aldehydes and aromatic aldehydes.

Examples of the aliphatic aldehydes include formaldehyde, acetaldehyde, propionaldehyde, n-butyraldehyde, isobutyraldehyde, n-valeraldehyde, n-hexylaldehyde, 2-ethylbutyraldehyde, 2-ethylhexylaldehyde, n-heptylaldehyde, n-octylaldehyde, n-nonylaldehyde, n-decylaldehyde, and amylaldehyde.

Examples of the aromatic aldehydes include aromatic aldehydes such as benzaldehyde, cinnamaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and β-phenylpropionaldehyde.

These aldehydes may be used alone or in combination of two or more thereof. Preferred among these aldehydes are formaldehyde, acetaldehyde, butyraldehyde, 2-ethylhexylaldehyde, and n-nonylaldehyde because they are excellent in acetalization reactivity and can give the resin to be prepared a sufficient internal plasticization effect to impart favorable flexibility. More preferred are formaldehyde, acetaldehyde, and butyraldehyde because they can provide an adhesive composition particularly excellent in impact resistance and adhesiveness to metal.

The amount of the aldehyde can be appropriately determined in accordance with the acetal group content of the aimed polyvinyl acetal resin. In particular, the amount is preferably 50 mol% or more and 95 mol% or less, more preferably 55 mol% or more and 90 mol% or less relative to 100 mol% of the polyvinyl alcohol because the acetalization reaction can be carried out efficiently and unreacted aldehyde is easily removable.

The acetalization reaction is preferably carried out by raising the temperature at a predetermined temperature rise rate and then maintaining the temperature for a certain period of time.

The temperature rise time in the acetalization reaction is preferably 120 minutes or more and 420 minutes or less, more preferably 180 minutes or more and 360 minutes or less. In other words, the temperature rise time is preferably 120 to 420 minutes, more preferably 180 to 360 minutes.

The temperature rise rate is preferably 0.1°C/min or higher and 0.4°C/min or lower. In other words, the temperature rise rate is preferably 0.1 to 0.4°C/min.

Raising the temperature with the above-described temperature rise time and temperature rise rate allows the molecular weight differential distribution value at the above Mz and Log M = 6.00 to be within a predetermined range.

The holding time in the acetalization reaction is preferably 1 hour or more and 10 hours or less, more preferably 2 hours or more and 9 hours or less, still more preferably 2.6 hours or more. In other words, the holding time is preferably 1 to 10 hours, more preferably 2 to 9 hours. Setting the holding time within the above range allows the Mz to be within a predetermined range.

The holding temperature in the acetalization reaction is preferably 30°C or higher and 80°C or lower, more preferably 40°C or higher and 70°C or lower. In other words, the holding temperature is preferably 30°C to 80°C, more preferably 40°C to 70°C. Setting the holding temperature within the above range allows the molecular weight differential distribution value at the above Mz and Log M = 6.00 to be within a predetermined range.

The present invention also encompasses a resin composition for a ceramic green sheet containing the polyvinyl acetal resin of the present invention and a plasticizer.

The resin composition for a ceramic green sheet of the present invention may contain components such as an antioxidant, a surfactant, an ultraviolet absorber, and a defoamer, as long as the effects of the present invention are not impaired.

The resin composition for a ceramic green sheet of the present invention may be produced by, for example, a method including: adding a plasticizer and other optional additives to a polyvinyl acetal resin obtained by acetalizing a polyvinyl alcohol resin with an aldehyde; and mixing them.

The resin composition for a ceramic green sheet of the present invention may contain a plasticizer. Adding a plasticizer can significantly improve the mechanical strength and flexibility of the resulting ceramic green sheet.

Examples of the plasticizer include: phthalate diesters such as dioctyl phthalate (DOP) and dibutyl phthalate (DBP); adipate diesters such as dioctyl adipate; and alkylene glycol diesters such as triethylene glycol-di-2-ethylhexanoate, tetraethylene glycol-di-2-ethylhexanoate, triethylene glycol-di-2-ethylbutyrate, tetraethylene glycol-di-2-ethylbutyrate, tetraethylene glycol-di-heptanoate, and triethylene glycol-di-heptanoate.

In the resin composition for a ceramic green sheet of the present invention, the lower limit of the amount of the plasticizer relative to 100 parts by weight of the polyvinyl acetal resin is preferably 7 parts by weight, more preferably 8.5 parts by weight, and the upper limit thereof is preferably 18 parts by weight, more preferably 13.5 parts by weight.

A slurry composition for a ceramic green sheet can be produced by mixing the resin composition for a ceramic green sheet of the present invention, an organic solvent, and ceramic powder.

The organic solvent may be any organic solvent that can dissolve the polyvinyl acetal resin. Examples thereof include ketones such as acetone, methyl ethyl ketone, dipropyl ketone, and diisobutyl ketone. Examples also include alcohols such as methanol, ethanol, isopropanol, and butanol, and aromatic hydrocarbons such as toluene and xylene. Examples also include esters such as methyl propionate, ethyl propionate, butyl propionate, methyl butanoate, ethyl butanoate, butyl butanoate, methyl pentanoate, ethyl pentanoate, butyl pentanoate, methyl hexanoate, ethyl hexanoate, butyl hexanoate, 2-ethylhexyl acetate, and 2-ethylhexyl butyrate. Examples also include methyl cellosolve, ethyl cellosolve, butyl cellosolve, terpineol, dihydroterpineol, butyl cellosolve acetate, butyl carbitol acetate, terpineol acetate, and dihydroterpineol acetate. Particularly preferred are alcohols, ketones, aromatic hydrocarbons, and solvent mixtures thereof from the viewpoint of coatability and drying characteristics. More preferred among these are solvent mixtures of ethanol and toluene and solvent mixtures of methyl ethyl ketone and toluene.

The amount of the organic solvent in the slurry composition for a ceramic green sheet is set according to factors such as the type of the polyvinyl acetal resin used, and thus is not limited. The organic solvent in too small an amount is less likely to provide solubility required for kneading. The organic content in too large an amount may excessively lower the viscosity of the slurry composition for a ceramic green sheet and deteriorate handleability in producing a ceramic green sheet. The organic solvent content is thus preferably 20% by weight or more and 80% by weight or less.

Examples of the ceramic powder include powders of an oxide or non-oxide of a metal or non-metal used in ceramic production. These powders each may be a powder of one compound having a single composition or a mixture of compounds each having a single composition. For the constituent elements of the oxide or non-oxide of a metal, both the cation and anion may be composed of a single element or multiple elements. The oxide or non-oxide may further contain an additive to improve the characteristics of the oxide or non-oxide. Specific examples thereof include oxides, carbides, nitrides, borides, and sulfides of Li, K, Mg, B, Al, Si, Cu, Ca, Sr, Ba, Zn, Cd, Ga, In, Y, lanthanoid, actinoid, Ti, Zr, Hf, Bi, V, Nb, Ta, W, Mn, Fe, Co, and Ni.

Specific examples of a powder of an oxide containing multiple metal elements, which is typically called a multiple oxide, can be classified as follows by their crystalline structure. Examples of those having a perovskite-type structure include NaNbO₃, SrZrO₃, PbZrO₃, SrTiO₃, BaZrO₃, PbTiO₃, and BaTiO₃. Examples of those having a spinel-type structure include MgAl₂O₄, ZnAl₂O₄, CoAl₂O₄, NiAl₂O₄, and MgFe₂O₄. Examples of those having an ilmenite-type structure include MgTiO₃, MnTiO₃, and FeTiO₃. Examples of those having a garnet-type structure include GdGa₅O₁₂ and Y₆Fe₅O₁₂. In particular, the modified polyvinyl acetal resin of the present application exhibits high characteristics for a ceramic green sheet containing BaTiO₃ powder.

The ceramic powder may have any average particle size. For example, for production of a thin ceramic green sheet (thickness of 5 µm or less), the average particle size is preferably 0.5 µm or less.

The slurry composition for a ceramic green sheet may contain a different resin such as a polyvinyl acetal resin other than the polyvinyl acetal resin of the present invention, an acrylic resin, or ethylcellulose, as long as the effects of the present invention are not impaired. In such a case, the amount of the above polyvinyl acetal resin of the present invention relative to the entire binder resin is preferably 50% by weight or more.

To the slurry composition for a ceramic green sheet may be added a dispersant, an antioxidant, an ultraviolet absorber, a surfactant, a filler, and/or the like, as needed. In some cases, a small amount of a different resin such as an acrylic resin or a urethane resin may be added.

The method for producing the slurry composition for a ceramic green sheet is not limited. For example, the composition may be produced by a method including mixing the polyvinyl acetal resin of the present invention, the organic solvent, the ceramic powder, and optional various additives in any of various mixers such as a ball mill, a blender mill, or a triple roll mill.

A ceramic green sheet can be obtained by applying the slurry composition for a ceramic green sheet and then heating and drying the composition.

The ceramic green sheet may be used to produce a ceramic electronic component. For example, a ceramic electronic component may be produced by performing the steps of: applying a paste for an electrode layer to a surface of the ceramic green sheet; stacking and thermally pressure-bonding ceramic green sheets each provided with an electrode layer; and debinding and firing the obtained laminate.

The method for applying the slurry composition for a ceramic green sheet is not limited. Examples thereof include a roll coater, a die coater, and a curtain coater. For other specific methods, conventionally known methods may be used.

The ceramic electronic component is not limited. Examples thereof include multilayer ceramic capacitors, multilayer ceramic inductors, capacitors, piezoelectric actuators, multilayer varistors, multilayer thermistors, EMI filters, aluminum nitride multilayer boards, and alumina multilayer boards.

In the method for producing the ceramic electronic component, the step of applying a paste for an electrode layer to a surface of the ceramic green sheet is performed.

The paste for an electrode layer may be produced by, for example, dissolving a resin such as a polyvinyl acetal resin, ethyl cellulose, or an acrylic resin as a binder resin in an organic solvent and dispersing conductive powder or the like in the solution. These resins may be used alone or in combination of two or more thereof. A paste for an electrode layer containing a polyvinyl acetal resin is preferred because such a paste has excellent adhesion to ceramic green sheets in the thermally pressure-bonding step.

In the method for producing the ceramic electronic component, after the above ceramic green sheet provided with an electrode layer is produced, at least one ceramic green sheet provided with an electrode layer is further produced in the same manner, and the ceramic green sheets are stacked and thermally pressure-bonded. The resulting laminate is debinded and fired, whereby a multilayer ceramic electronic component without problems such as sheet attack (phenomenon in which the solvent in the paste for an electrode layer dissolves the resin in the ceramic green sheets, causing defects) or cracks can be obtained.

The thermal pressure bonding step and the laminate debinding and firing step are not limited, and can be performed by conventionally known methods.

### - Advantageous Effects of Invention

The present invention can provide a polyvinyl acetal resin and a resin composition for a ceramic green sheet. The polyvinyl acetal resin and the resin composition can provide a ceramic green sheet which has high strength and is less susceptible to delamination and dimensional changes during drying. The polyvinyl acetal resin and the resin composition can also provide a multilayer ceramic capacitor with excellent reliability.

Furthermore, use of the polyvinyl acetal resin of the present invention can significantly improve the dispersibility and dispersion stability of the ceramic powder.

### BRIEF DESCRIPTION OF DRAWINGS

FIG. 1 shows an example of a molecular weight differential distribution curve.

### DESCRIPTION OF EMBODIMENTS

The present invention is more specifically described in the following with reference to, but not limited to, examples.

### (Example 1)

Pure water (3000 g) was added to 300 g of a polyvinyl alcohol resin (average degree of polymerization 1,700, degree of saponification 99.0 mol%). They were stirred at 90°C for about two hours for dissolution. This solution was cooled to 20°C. To the solution were added 120 g of hydrochloric acid having a concentration of 35% by weight and 140 g of n-butyraldehyde. The mixture was heated at a temperature rise rate of 0.2°C/min (temperature rise time 250 min) and held at 70°C for three hours for an acetalization reaction. After the completion of the reaction, neutralization, washing with water, and drying were performed by conventional methods, whereby white powder of a polyvinyl acetal resin was obtained.

### (Production of resin composition for ceramic green sheet)

An amount of 1.25 parts by weight of the obtained polyvinyl acetal resin was added to 48.75 parts by weight of an ethanol/toluene solvent mixture (weight ratio 1:1). They were stirred for dissolution, whereby a resin composition for a ceramic green sheet was obtained.

### (Production of resin sheet)

The obtained resin composition for a ceramic green sheet was applied using a coater onto a release-treated PET film to a dried thickness of 20 µm, and then heated and dried at 70°C for 60 minutes, whereby a resin sheet was obtained.

### (Preparation of slurry composition)

The obtained polyvinyl acetal resin (2 parts by weight) and 2 parts by weight of dioctylphthalate (DOP) were added to 96 parts by weight of an ethanol/toluene solvent mixture (weight ratio 1:1), and they were stirred for dissolution. Thus, a resin solution was prepared.

Separately, 3 parts by weight of a polyvinyl acetal resin "BL-1" (produced by Sekisui Chemical Co., Ltd.) was added to 40 parts by weight of an ethanol/toluene solvent mixture (weight ratio 1:1), and they were stirred for dissolution. Subsequently, to the obtained mixture was added 100 parts by weight of barium titanate powder (produced by Sakai Chemical Industry Co., Ltd., BT01), and they were stirred in a bead mill (produced by AIMEX Co., Ltd., Ready Mill) for 180 minutes, whereby an inorganic dispersion was prepared.

To the obtained inorganic dispersion was added 100 parts by weight of the resin solution, and they were stirred in the bead mill, whereby a slurry composition was obtained. During the stirring, the slurry composition was sampled every five minutes, a 0.1 parts by weight portion of the slurry composition was added to 10 parts by weight of an ethanol/toluene solvent mixture (weight ratio 1:1), and they were stirred with an ultrasonic disperser (produced by SND Co., Ltd., US-303) to prepare a solution for dispersion evaluation. The particle size distribution was measured using a laser diffraction particle size distribution analyzer (produced by HORIBA, Ltd., LA-910). Stirring was stopped when the D50 value of the particle size distribution reached 1.0 µm.

### (Example 2)

Pure water (3000 g) was added to 300 g of a polyvinyl alcohol resin (average degree of polymerization 3,000, degree of saponification 98.9 mol%). They were stirred at 90°C for about two hours for dissolution. This solution was cooled to 20°C. To the solution were added 120 g of hydrochloric acid having a concentration of 35% by weight and 140 g of n-butyraldehyde. The mixture was heated at a temperature rise rate of 0.2°C/min (temperature rise time 250 min) and held at 70°C for three hours for an acetalization reaction. After the completion of the reaction, neutralization, washing with water, and drying were performed by conventional methods, whereby white powder of a polyvinyl acetal resin, a resin composition for a ceramic green sheet, a resin sheet, and a slurry composition were obtained.

### (Example 3)

Pure water (3000 g) was added to 300 g of a polyvinyl alcohol resin (average degree of polymerization 5,000, degree of saponification 98.9 mol%). They were stirred at 90°C for about two hours for dissolution. This solution was cooled to 20°C. To the solution were added 120 g of hydrochloric acid having a concentration of 35% by weight and 140 g of n-butyraldehyde. The mixture was heated at a temperature rise rate of 0.2°C/min (temperature rise time 250 min) and held at 70°C for two hours for an acetalization reaction. After the completion of the reaction, neutralization, washing with water, and drying were performed by conventional methods, whereby white powder of a polyvinyl acetal resin, a resin composition for a ceramic green sheet, a resin sheet, and a slurry composition were obtained.

### (Example 4)

Pure water (3000 g) was added to 300 g of a polyvinyl alcohol resin (average degree of polymerization 9,000, degree of saponification 98.9 mol%). They were stirred at 90°C for about two hours for dissolution. This solution was cooled to 20°C. To the solution were added 120 g of hydrochloric acid having a concentration of 35% by weight and 140 g of n-butyraldehyde. The mixture was heated at a temperature rise rate of 0.2°C/min (temperature rise time 250 min) and held at 70°C for three hours for an acetalization reaction. After the completion of the reaction, neutralization, washing with water, and drying were performed by conventional methods, whereby white powder of a polyvinyl acetal resin, a resin composition for a ceramic green sheet, a resin sheet, and a slurry composition were obtained.

### (Example 5)

Pure water (3000 g) was added to 300 g of a polyvinyl alcohol resin (average degree of polymerization 1,700, degree of saponification 98.8 mol%). They were stirred at 90°C for about two hours for dissolution. This solution was cooled to 20°C. To the solution were added 120 g of hydrochloric acid having a concentration of 35% by weight and 140 g of n-butyraldehyde. The mixture was heated at a temperature rise rate of 0.16°C/min (temperature rise time 250 min) and held at 60°C for three hours for an acetalization reaction. After the completion of the reaction, neutralization, washing with water, and drying were performed by conventional methods, whereby white powder of a polyvinyl acetal resin, a resin composition for a ceramic green sheet, a resin sheet, and a slurry composition were obtained.

### (Example 6)

Pure water (3000 g) was added to 300 g of a polyvinyl alcohol resin (average degree of polymerization 800, degree of saponification 98.8 mol%). They were stirred at 90°C for about two hours for dissolution. This solution was cooled to 20°C. To the solution were added 150 g of hydrochloric acid having a concentration of 35% by weight and 145 g of n-butyraldehyde. The mixture was heated at a temperature rise rate of 0.16°C/min (temperature rise time 250 min) and held at 60°C for three hours for an acetalization reaction. After the completion of the reaction, neutralization, washing with water, and drying were performed by conventional methods, whereby white powder of a polyvinyl acetal resin, a resin composition for a ceramic green sheet, a resin sheet, and a slurry composition were obtained.

### (Comparative Example 1)

Pure water (3000 g) was added to 300 g of a polyvinyl alcohol resin (average degree of polymerization 300, degree of saponification 99.0 mol%). They were stirred at 90°C for about two hours for dissolution. This solution was cooled to 20°C. To the solution were added 150 g of hydrochloric acid having a concentration of 35% by weight and 145 g of n-butyraldehyde. The mixture was heated at a temperature rise rate of 0.5°C/min (temperature rise time 10 min) and held at 25°C for four hours for an acetalization reaction. After the completion of the reaction, neutralization, washing with water, and drying were performed by conventional methods, whereby white powder of a polyvinyl acetal resin, a resin composition for a ceramic green sheet, a resin sheet, and a slurry composition were obtained.

### (Comparative Example 2)

Pure water (3000 g) was added to 300 g of a polyvinyl alcohol resin (average degree of polymerization 500, degree of saponification 98.5 mol%). They were stirred at 90°C for about two hours for dissolution. This solution was cooled to 20°C. To the solution were added 150 g of hydrochloric acid having a concentration of 35% by weight and 145 g of n-butyraldehyde. The mixture was heated at a temperature rise rate of 0.5°C/min (temperature rise time 10 min) and held at 25°C for three hours for an acetalization reaction. After the completion of the reaction, neutralization, washing with water, and drying were performed by conventional methods, whereby white powder of a polyvinyl acetal resin, a resin composition for a ceramic green sheet, a resin sheet, and a slurry composition were obtained.

### (Comparative Example 3)

Pure water (3000 g) was added to 300 g of a polyvinyl alcohol resin (average degree of polymerization 800, degree of saponification 99.0 mol%). They were stirred at 90°C for about two hours for dissolution. This solution was cooled to 20°C. To the solution were added 150 g of hydrochloric acid having a concentration of 35% by weight and 145 g of n-butyraldehyde. The mixture was heated at a temperature rise rate of 0.7°C/min (temperature rise time 7 min) and held at 25°C for three hours for an acetalization reaction. After the completion of the reaction, neutralization, washing with water, and drying were performed by conventional methods, whereby white powder of a polyvinyl acetal resin, a resin composition for a ceramic green sheet, a resin sheet, and a slurry composition were obtained.

### (Comparative Example 4)

Pure water (3000 g) was added to 300 g of a polyvinyl alcohol resin (average degree of polymerization 9,000, degree of saponification 99.0 mol%). They were stirred at 90°C for about two hours for dissolution. This solution was cooled to 20°C. To the solution were added 150 g of hydrochloric acid having a concentration of 35% by weight and 145 g of n-butyraldehyde. The mixture was heated at a temperature rise rate of 0.7°C/min (temperature rise time 10 min) and held at 25°C for 2.5 hours for an acetalization reaction. After the completion of the reaction, neutralization, washing with water, and drying were performed by conventional methods, whereby white powder of a polyvinyl acetal resin, a resin composition for a ceramic green sheet, a resin sheet, and a slurry composition were obtained.

### (Comparative Example 5)

Pure water (3000 g) was added to 300 g of a polyvinyl alcohol resin (average degree of polymerization 8,800, degree of saponification 99.0 mol%). They were stirred at 90°C for about two hours for dissolution. This solution was cooled to 20°C. To the solution were added 150 g of hydrochloric acid having a concentration of 35% by weight and 150 g of n-butyraldehyde. The mixture was heated at a temperature rise rate of 0.7°C/min (temperature rise time 7 min) and held at 25°C for 2.5 hours for an acetalization reaction. After the completion of the reaction, neutralization, washing with water, and drying were performed by conventional methods, whereby white powder of a polyvinyl acetal resin, a resin composition for a ceramic green sheet, a resin sheet, and a slurry composition were obtained.

### (Comparative Example 6)

Pure water (3000 g) was added to 300 g of a polyvinyl alcohol resin (average degree of polymerization 800, degree of saponification 98.7 mol%). They were stirred at 90°C for about two hours for dissolution. This solution was cooled to 20°C. To the solution were added 150 g of hydrochloric acid having a concentration of 35% by weight and 160 g of n-butyraldehyde. The mixture was held at 20°C for three hours for an acetalization reaction. After the completion of the reaction, neutralization, washing with water, and drying were performed by conventional methods, whereby white powder of a polyvinyl acetal resin, a resin composition for a ceramic green sheet, a resin sheet, and a slurry composition were obtained.

### (Evaluation)

The polyvinyl acetal resins, resin compositions for a ceramic green sheet, resin sheets, and slurry compositions obtained in the examples and the comparative examples were evaluated as follows. Table 1 shows the results.

### (1) Evaluation of polyvinyl acetal resin

### (1-1) Acetal group content, hydroxy group content, and acetyl group content

The obtained polyvinyl acetal resin was subjected to ¹H-NMR analysis using a spectrometer AV400 model (produced by Bruker Corporation), and the acetal group content, hydroxy group content, and acetyl group content were calculated.

The obtained polyvinyl acetal resin was dissolved in DMSO-D₆ at a concentration of 1.6% by weight to prepare a measurement solution. The solution was subjected to ¹H-NMR analysis at 80°C.

### (1-2) Molecular weight differential distribution value at Mz and Log M = 6.00

The obtained polyvinyl acetal resin was dissolved in tetrahydrofuran (THF) at a concentration of 0.2% by weight, and the solution was subjected to measurement using a GPC apparatus HLC-8220 (produced by Tosoh Corporation). From the measurement results, the Z average molecular weight Mz was calculated using a molecular weight calibration curve prepared using monodisperse polystyrene standard samples.

From the obtained molecular weight differential distribution curve, the molecular weight differential distribution value at Log M = 6.00 was measured.

The column used was TSKgel Super HZ (produced by Tosoh Corporation).

### (2) Evaluation of resin sheet

### (2-1) Tensile modulus of elasticity, elongation at break, and stress at break

The stress at break (MPa), elongation at break (%), and tensile modulus of elasticity (MPa) of the obtained resin sheet were measured in conformity with JIS K 7113 using a tensile tester (produced by Shimadzu Corporation, AUTOGRAPH AGS-J) at a tensile speed of 20 mm/min.

### (3) Evaluation of slurry composition

### (3-1) Dispersibility

### (Preparation of solution for dispersion evaluation)

First, 0.1 parts by weight of the slurry composition was added to 10 parts by weight of an ethanol/toluene solvent mixture (weight ratio 1:1), and the mixture was stirred with an ultrasonic disperser (produced by SND Co., Ltd., US-303) to prepare a solution for evaluation of dispersibility.

### (Evaluation of dispersibility)

The particle size distribution of the obtained solution for evaluation of dispersibility was measured 60 minutes after the end of stirring.

The particle size distribution was measured using a laser diffraction particle size distribution analyzer (produces by HORIBA, Ltd., LA-910) to determine the average particle size.

### (3-2) Dispersion stability

The solution for evaluation of dispersibility obtained in (3-1) above was left to stand at 23°C for one week. Thereafter, the solution was subjected to measurement of the particle size distribution to determine the average particle size.

### (4) Evaluation of ceramic green sheet

### (Preparation of ceramic green sheet)

The obtained slurry composition was applied to a release-treated PET film to a dried thickness of 20 µm using a coater. The composition was heated and dried, whereby a ceramic green sheet was prepared.

### (4-1) Tensile modulus of elasticity, elongation at break, and stress at break

### (Preparation of ceramic green sheets)

One part by weight of a polyvinyl acetal resin (produced by Sekisui Chemical Co., Ltd., BL-1) was added to a solvent mixture of 20 parts by weight of toluene and 20 parts by weight of ethanol, and they were stirred for dissolution. Subsequently, to the obtained solution was added 100 parts by weight of barium titanate powder (produced by Sakai Chemical Industry Co., Ltd., BT01, average particle size 0.1 µm), followed by stirring in a bead mill (produced by AIMEX Co., Ltd., Ready Mill) for 180 minutes, whereby an inorganic dispersion was prepared.

To the obtained inorganic dispersion was added the resin composition for a ceramic green sheet obtained in any of the examples and comparative examples. After stirring in a bead mill for 90 minutes, the mixture was applied to a release-treated PET film using a coater to a dried thickness of 20 µm. Then, the mixture was heated and dried at 40°C for 30 minutes. The PET film was removed, whereby a ceramic green sheet was obtained.

The stress at break (MPa), tensile modulus of elasticity (MPa), and elongation at break (%) of the obtained ceramic green sheet were measured in conformity with JIS K 7113 using a tensile tester (produced by Shimadzu Corporation, AUTOGRAPH AGS-J) at a tensile speed of 20 mm/min.

### (4-2) Section state

The fracture surface after the measurement of "(4-1) Tensile modulus of elasticity, elongation at break, and stress at break" was observed with an SEM, and evaluated in accordance with the following criteria.
∘∘ (Excellent): The fracture surface was not chipped, cracked, or scratched.
∘ (Good): The fracture surface was not chipped or cracked, but was scratched.
Δ (Fair): The fracture surface was not chipped but was cracked.
× (Poor): The fracture surface was chipped, and separation between sheets occurred.

### (4-3) Dimensional change rate

A ceramic green sheet was produced as in "(4-1) Tensile modulus of elasticity, elongation at break, and stress at break". The obtained ceramic green sheet was dried at 70°C for three hours. The dimensional change rate before and after the drying at 70°C was calculated and evaluated in accordance with the following criteria.
∘∘ (Excellent): not higher than 2%
∘ (Good): higher than 2% and not higher than 3%
Δ (Fair): higher than 3% and not higher than 4%
× (Poor): higher than 4 %

**[Table 1]**

| | Production method | | Polyvinyl acetal resin | | | | | | Evaluation | | | | | | | | | |
|---|---|---|---|---|---|---|---|---|---|---|---|---|---|---|---|---|---|---|
| | Holding temperature [°C] | Holding time [Hr] | Acetal group content [mol%] | Acetyl group content [mol%] | Hydroxy group content [mol%] | Mz | Molecular weight differential distribution value at Log M = 6.00 | Hydroxy group content /Mz* | Resin sheet | | | Slurry composition | | Ceramic green sheet evaluation | | | | |
| | | | | | | | | | Stress at break [MPa] | Elongation at break [%] | Tensile modulus of elasticity [MPa] | Dispersibility (after 60 minutes) [µm] | Dispersion stability [µm] | Stress at break [MPa] | Tensile modulus of elasticity [MPa] | Elongation at break [%] | Section state evaluation | Dimensional change rate |
| Example 1 | 70 | 3 | 65.2 | 1.0 | 338 | 1,304,000 | 25.15 | 2.59E-05 | 33 | 188 | 550 | 0.221 | 0.332 | 33 | 1050 | 23 | ○○ | ○○ |
| Example 2 | 70 | 3 | 64.8 | 1.0 | 34.2 | 1,290,880 | 49.22 | 2.65E-05 | 35 | 200 | 745 | 0.355 | 0.389 | 42 | 1125 | 28 | ○○ | ○○ |
| Example 3 | 70 | 3 | 65.3 | 1.1 | 33 6 | 1,785,533 | 71.34 | 1.88E-05 | 50 | 242 | 810 | 0.412 | 0.443 | 48 | 1258 | 33 | ○ | ○ |
| Exam ple 4 | 70 | 3 | 64.7 | 1.1 | 34.2 | 2,293,459 | 93.48 | 1.49E-05 | 70 | 320 | 740 | 0.455 | 0.488 | 55 | 1458 | 41 | ○ | ○ |
| Example 5 | 60 | 3 | 64.8 | 1.0 | 34.2 | 1,289,300 | 20.10 | 2.65E-05 | 34 | 178 | 568 | 0.210 | 0.348 | 33 | 1011 | 25 | ○ | ○ |
| Example 6 | 60 | 3 | 66.0 | 1.2 | 32.8 | 859,233 | 9.770 | 3.82E-05 | 38 | 155 | 220 | 0.220 | 0.278 | 28 | 910 | 18 | ○ | ○○ |
| Comparative Example 1 | 25 | 4 | 65.0 | 1.0 | 34.0 | 126,809 | 0.23 | 2.68E-04 | 25 | 90 | 100 | 0.210 | 0.648 | 18 | 825 | 13 | × | × |
| Comparative Example 2 | 25 | 3 | 64.9 | 1.0 | 34.1 | 652,980 | 2.99 | 5.22E-05 | 27 | 135 | 130 | 0.220 | 0.621 | 20 | 880 | 15 | × | × |
| Comparative Example 3 | 25 | 3 | 64.0 | 1.0 | 35.0 | 789,483 | 4.95 | 4.43E-05 | 30 | 180 | 200 | 0.236 | 0.667 | 25 | 996 | 18 | △ | △ |
| Comparative Example 4 | 25 | 2.5 | 64.5 | 1.0 | 345 | 2,498,500 | 117.05 | 1.38E-05 | 55 | 236 | 822 | 0.882 | 1.533 | 29 | 998 | 20 | × | × |
| Comparative Example 5 | 25 | 2.5 | 64.5 | 1.0 | 34.5 | 2,601,554 | 120.01 | 1.33E-05 | 57 | 237 | 823 | 0.902 | 1.556 | 28 | 988 | 21 | × | × |
| Comparative Example *6* | 20 | 3 | 67.5 | 1.3 | 31.2 | 772,321 | 4.36 | 4.04E-05 | 23 | 191 | 177 | 0.251 | 0.601 | 20 | 882 | 16 | △ | × |

| | | | | | | | | | | | | | | | | | | |
|---|---|---|---|---|---|---|---|---|---|---|---|---|---|---|---|---|---|---|
| * : E-0X = 10^{-X} | | | | | | | | | | | | | | | | | | |

### INDUSTRIAL APPLICABILITY

The present invention can provide a polyvinyl acetal resin and a resin composition for a ceramic green sheet. The polyvinyl acetal resin and the resin composition can provide a ceramic green sheet in which ceramic powder has excellent dispersibility and excellent dispersion stability and which has high strength and is less susceptible to delamination and dimensional changes during drying. The polyvinyl acetal resin and the resin composition can also provide a multilayer ceramic capacitor with excellent reliability.

## Claims

1. A polyvinyl acetal resin having a Z average molecular weight (Mz) of 700,000 or more and 2,500,000 or less and a molecular weight differential distribution value at Log M = 6.00 of 5.00 or more and 110.0 or less.

2. The polyvinyl acetal resin according to claim 1,
wherein a hydroxy group content relative to the Z average molecular weight (Hydroxy group content/Z average molecular weight) is 1.30 × 10⁻⁵ or more.

3. The polyvinyl acetal resin according to claim 1 or 2,
wherein the acetal group content is 50 to 83 mol%.

4. A resin composition for a ceramic green sheet, the resin composition comprising:
the polyvinyl acetal resin according to claim 1 or 2; and
a plasticizer.
